# FASCICULE DE BREVET EUROPEEN

(11) **EP 3 844 032 B1**
(45) Date de publication et mention de la délivrance du brevet: **27.11.2024**
(21) Numéro de dépôt: 19759558.0
(22) Date de dépôt: 27.08.2019
(51) Int. Cl.: B60R 16/04, H02J 7/14

(54) **CIRCUIT ÉLECTRIQUE, ET VÉHICULE AUTOMOBILE COMPRENANT UN TEL CIRCUIT**
ELEKTRISCHE SCHALTUNG UND KRAFTFAHRZEUG MIT SOLCH EINER SCHALTUNG
ELECTRICAL CIRCUIT AND MOTOR VEHICLE COMPRISING SUCH A CIRCUIT

(30) Priorité: 28.08.2018 FR 1857696
(43) Date de publication de la demande: 07.07.2021
(73) Titulaire: NEW H POWERTRAIN HOLDING, S.L.U., 47008 Valladolid (ES)
(72) Inventeur: HIRON, Christian, 78690 Les Essarts le Roi (FR); DUDEZERT, Christophe, 75014 PARIS (FR)
(74) Mandataire: Renault Group
(86) Numéro de dépôt international: PCT/EP2019/072753
(87) Numéro de publication internationale: WO 2020/043682

(56) Documents cités:
- FR-A1- 3 039 934
- US-A1- 2015 188 207
- US-A1- 2016 137 092
- US-A1- 2017 264 136
- US-B1- 6 545 445

## Description

### DOMAINE TECHNIQUE AUQUEL SE RAPPORTE L'INVENTION

La présente invention concerne de manière générale le domaine des circuits électriques d'alimentation pour véhicules automobiles à moteurs à combustion interne.

Elle concerne plus particulièrement un tel circuit électrique, comprenant :
- une première batterie électrique, connectée dans le circuit électrique par l'intermédiaire d'un premier interrupteur commandé,
- une deuxième batterie électrique, connectée dans le circuit électrique par l'intermédiaire d'un deuxième interrupteur commandé, et
- une unité de commande électronique apte à commander les premier et deuxième interrupteurs commandés.

Elle concerne également un véhicule automobile comprenant un moteur à combustion interne ainsi qu'un circuit électrique d'alimentation de ce type.

### ARRIERE-PLAN TECHNOLOGIQUE

Dans un véhicule automobile à moteur à combustion interne, le démarrage du moteur est assuré par un démarreur alimenté par une batterie électrique, généralement une batterie électrique au plomb.

Dans la plupart des véhicules automobiles produits aujourd'hui, cette batterie électrique débite un courant électrique de veille lorsque le véhicule est à l'arrêt et inoccupé, en phase de stationnement prolongé (ce courant électrique de veille est parfois appelé courant « off »). Le courant électrique de veille alimente divers équipements de bord du véhicule qui fonctionnent même lors de cette phase de stationnement. Ces équipements peuvent par exemple comprendre une unité de commande électronique du véhicule, qui est mise sous tension de manière automatique (sans intervention extérieure au véhicule) pendant de courtes périodes de temps, à intervalles réguliers, pour surveiller l'état du véhicule. Ces équipements comprennent aussi, généralement, un système électromécanique d'ouverture centralisée du véhicule, qui teste régulièrement si un badge d'ouverture du véhicule est à proximité du véhicule, ou non.

Même si le courant électrique de veille est peu intense, il est débité par la batterie pendant une période très longue, pouvant dépasser le mois, lorsque le véhicule stationne de manière prolongée. La charge électrique totale débitée de ce fait par la batterie peut alors être très importante, de l'ordre de plusieurs dizaine d'ampères-heures. Après un stationnement de longue durée, la batterie est donc déchargée en partie, parfois de plus de la moitié de sa capacité de charge totale.

Même après une telle décharge, la batterie doit pouvoir délivrer la puissance électrique nécessaire pour que le démarreur fasse démarrer le moteur à combustion interne.

Pour satisfaire cette contrainte, la batterie électrique du véhicule est généralement choisie avec une capacité de charge très grande, nettement supérieure à la somme de la charge électrique généralement consommée lors d'un stationnement prolongée, et de la charge électrique consommée lors d'un démarrage du moteur à combustion interne. En effet, pour pouvoir délivrer une puissance instantanée élevée, lors d'un tel démarrage, le niveau de charge de la batterie doit lui-même être élevé.

Mais cette batterie électrique, de capacité de charge très importante, est alors lourde, et coûteuse.

En outre, cette batterie doit être située à proximité immédiate du démarreur pour limiter la résistance de connexion entre la batterie et le démarreur (et limiter ainsi les chutes de tension entre les deux, lors du démarrage du moteur à combustion interne). La batterie, de grande capacité, constitue alors un élément encombrant qu'il faut loger dans le compartiment moteur. Cela est contraignant, d'autant plus que, s'agissant d'une batterie au plomb, elle doit rester facilement accessible pour pouvoir être remplacée régulièrement.

On connait par ailleurs du document WO 2017/163959 un circuit électrique d'alimentation pour un véhicule automobile comprenant un moteur à combustion interne. Ce circuit comprend une batterie électrique au plomb, et une batterie électrique au lithium. Si une augmentation de la tension électrique délivrée par le circuit est requise, il est prévu de connecter la batterie électrique au lithium via une résistance et deux transistors MOSFET, et non plus via un relais. Cela permet d'éviter qu'une recharge de la batterie au lithium, advenant du fait de cette augmentation de tension, ne ralentisse l'augmentation de tension en question. Cette disposition ne permet toutefois pas de résoudre le problème du poids et de l'encombrement de la batterie électrique, ou des batteries électriques destinées à alimenter le démarreur du véhicule.

Le document US 2016/137092 concerne un circuit électrique pour un véhicule selon le préambule de la revendication 1.

### OBJET DE L'INVENTION

Afin de remédier aux inconvénients précités de l'état de la technique, la présente invention propose un circuit électrique pour un véhicule automobile selon la revendication 1, comportant un moteur à combustion interne, et des équipements électriques, le circuit électrique comprenant :
- une première batterie électrique, connectée à une partie au moins desdits équipements électriques par l'intermédiaire d'un premier interrupteur commandé,
- une deuxième batterie électrique, connectée à une partie au moins desdits équipements électriques par l'intermédiaire d'un deuxième interrupteur commandé, et
- une unité de commande électronique apte à commander les premier et deuxième interrupteurs commandés.

Selon l'invention :
- l'unité de commande est programmée pour :
   - commander le premier interrupteur dans un état d'ouverture et commander le deuxième interrupteur dans un état de fermeture lorsque le véhicule automobile est en stationnement prolongé, et pour
   - commander le premier interrupteur dans un état de fermeture en phase de démarrage du moteur à combustion interne du véhicule, et, en outre,
- à niveau de charge égal, une tension électrique en circuit ouvert présentée par la deuxième batterie est supérieure à une tension électrique en circuit ouvert présentée par la première batterie, et cela sur au moins une plage donnée de niveaux de charge.

Lors d'un stationnement prolongé du véhicule, le courant électrique de veille est donc fourni par la deuxième batterie électrique, tandis que la première batterie électrique ne débite pas de courant (puisque le premier interrupteur commandé est ouvert).

Le niveau de charge de la première batterie électrique est donc conservé pendant cette phase (il ne diminue pas ou quasiment pas), et peut ainsi rester à un niveau élevé. Comme son niveau de charge reste élevé, la première batterie est à même de délivrer la puissance électrique nécessaire au démarrage du moteur, et cela même s'il s'agit d'une batterie dont la capacité de charge totale est limitée.

Employer ainsi deux batteries distinctes, connectées par des interrupteurs pilotés de manière appropriée, permet donc de réduire considérablement les dimensions de la batterie électrique qui assure le démarrage du moteur à combustion interne (ici la première batterie), ce qui permet donc de résoudre le problème d'encombrement mentionné plus haut.

De plus, comme la tension électrique en circuit ouvert présentée par la deuxième batterie est supérieure à la tension électrique en circuit ouvert présentée par la première batterie (pour un même niveau de charge de ces deux batteries), la deuxième batterie peut, si nécessaire, charger la première batterie (et sans avoir pour cela à recourir à un système survolteur, qui rendrait le circuit électrique plus complexe et plus coûteux).

Ainsi, en plus d'éviter de décharger la première batterie lors d'un stationnement prolongé, le circuit électrique selon l'invention permet même de charger simplement cette batterie, pour qu'elle dispose d'un niveau de charge élevée, voir même maximal (de 100%), lors du démarrage le moteur à combustion interne.

Cela autorise une réduction encore plus importante des dimensions de la première batterie, par rapport à un circuit électrique d'alimentation usuel comprenant seulement une batterie électrique (au plomb).

A titre d'exemple, grâce à ces dispositions, la première batterie électrique peut être dimensionnée avec comme contrainte d'être apte, pour un niveau de charge de 80% (ou même de 100%), de faire démarrer le moteur à une température de -30 degrés Celsius. En termes de dimensions, cette contrainte est beaucoup moins forte que celle qu'il faudrait respecter dans un véhicule classique à une seule batterie (dans ce dernier cas, la batterie électrique devrait par exemple être à même, pour un niveau de charge de 20% ou 30%, de faire démarrer le moteur à une température de -30 degrés Celsius, ce qui ne peut être obtenu qu'avec une batterie de très grande capacité de charge).

Comme la première batterie électrique est destinée à alimenter le démarreur du moteur à combustion interne, elle doit être disposée à proximité de celui-ci (pour réduire la résistance électrique de connexion entre la batterie et le démarreur, comme déjà indiqué plus haut). La première batterie doit donc être apte à supporter la température élevée qui règne au voisinage du moteur à combustion interne sans se dégrader. Cela implique, pour une batterie au lithium, l'emploi d'une technologie assez onéreuse (par exemple une technologie de type « LMO/LTO », décrite plus loin). Mais comme la capacité de stockage de la première batterie peut être réduite au minimum nécessaire au démarrage du moteur, cela permet de compenser le coût qu'entraîne l'emploi d'une telle technologie.

Ainsi, la structure du circuit d'alimentation selon l'invention permet, pour un coût comparable à celui d'un circuit classique employant une batterie électrique au plomb, de passer à une technologie sans batterie au plomb. Cela est intéressant notamment parce que l'utilisation des batteries au plomb pourrait, à terme, être restreinte par différentes réglementations, et aussi parce que les batteries au lithium, entre autres, présentent généralement une puissance spécifique et une énergie massique supérieures à celles des batteries au plomb.

D'autres caractéristiques non limitatives et avantageuses du circuit électrique conforme à l'invention, prises individuellement ou selon toutes les combinaisons techniquement possibles, sont les suivantes :
- ladite plage de niveaux de charge s'étend d'un premier niveau de charge à un deuxième niveau de charge, le premier niveau de charge étant inférieur ou égal à 40% et le deuxième niveau de charge étant supérieur ou égal à 80% ;
- l'unité de commande est programmée pour, lorsque le véhicule est en stationnement prolongé :
   - acquérir une donnée représentative d'une température de la première batterie, et une donnée représentative d'un niveau de charge de la première batterie,
   - sur la base desdites données, comparer le niveau de charge de la première batterie avec un niveau de charge de démarrage pour lequel la première batterie, à ladite température, est apte à faire démarrer le moteur à combustion interne, et
   - lorsque cette comparaison montre que le niveau de charge de la première batterie est inférieur audit niveau de charge de démarrage, pour commander chacun des premier et deuxième interrupteurs commandés dans son état de fermeture ;
- la tension électrique en circuit ouvert présentée par la deuxième batterie est supérieure à la tension électrique en circuit ouvert présentée par la première batterie même lorsque la deuxième batterie n'est qu'à moitié chargée et que le niveau de charge de la première batterie est supérieur à un seuil de 80% ;
- la tension électrique en circuit ouvert présentée par la deuxième batterie lorsqu'elle est complètement déchargée est inférieure à la tension électrique en circuit ouvert présentée par la première batterie lorsqu'elle est complètement chargée ;
- le circuit électrique comprend en outre un alternateur à accoupler au moteur à combustion interne, l'alternateur étant configuré pour délivrer une tension électrique de bord réglable, au maximum égale à une tension nominale maximale ;
- la tension électrique en circuit ouvert présentée par la deuxième batterie devient supérieure à ladite tension nominale maximale pour un niveau de charge partiel de la deuxième batterie ;
- chacune des première et deuxième batteries est une batterie au Lithium ;
- l'unité de commande est programmée pour, lorsque le véhicule est en stationnement prolongé :
   - acquérir une donnée représentative du niveau de charge de la deuxième batterie, et
   - sur la base de ladite donnée acquise, comparer le niveau de charge de la deuxième batterie avec un niveau de charge minimal de réserve, et
   - lorsque cette comparaison montre que le niveau de charge de la deuxième batterie est inférieur ou égal au niveau de charge minimal de réserve, pour commander le deuxième interrupteur commandé dans son état d'ouverture.

L'invention propose également un véhicule automobile comprenant un moteur à combustion interne, des équipements électriques, et un circuit électrique tel que décrit ci-dessus.

On peut prévoir en particulier de loger la première batterie du circuit électrique dans un compartiment moteur du véhicule, et de loger la deuxième batterie hors du compartiment moteur.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, vue de dessus, un véhicule automobile selon un premier mode de réalisation de l'invention,
- la figure 2 est un schéma électrique représentant les principaux éléments d'un circuit électrique du véhicule de la figure 1,
- la figure 3 représente schématiquement l'évolution de tensions électriques (en volts) présentées respectivement par une première et une deuxième batteries électriques du circuit de la figure 2, en fonction de leurs niveaux de charge (exprimés en pourcent),
- la figure 4 représente schématiquement l'évolution, en fonction de la température de la première batterie exprimée en degrés Celsius, d'un niveau de charge minimal de cette batterie, au-dessus duquel elle est apte à faire démarrer un moteur à combustion interne du véhicule de la figure 1,
- la figure 5 représente schématiquement la deuxième batterie électrique d'un véhicule automobile selon un deuxième mode de réalisation de l'invention, et
- la figure 6 représente schématiquement l'évolution de la tension électrique (en volts) présentée par la deuxième batterie électrique de ce deuxième mode de réalisation, en fonction de son niveau de charge (en pourcent).

### Véhicule automobile

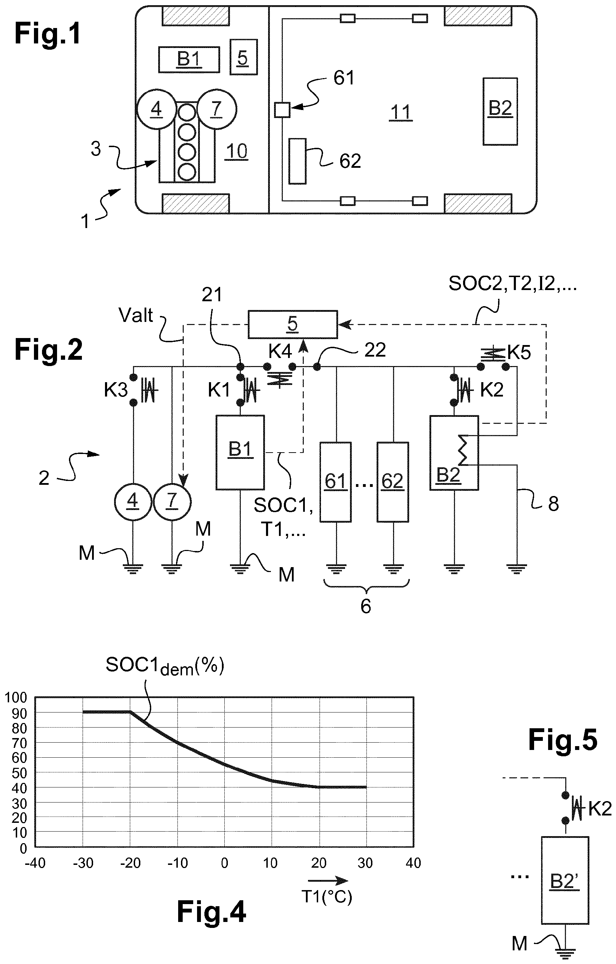

La figure 1 représente schématiquement un véhicule 1 automobile, selon un premier mode de réalisation de l'invention. La propulsion de ce véhicule est assurée par un moteur à combustion interne 3, logé dans un compartiment moteur 10 qui est séparé de l'habitacle 11 et qui est situé sous un capot du véhicule.

Le véhicule 1 comprend différents équipements électriques, notamment :
- un démarreur 4 accouplé au moteur à combustion interne 3,
- une unité de commande 5 électronique du véhicule, et
- des équipements de bord 6 distincts du démarreur 4, dont un système électromécanique d'ouverture centralisée 61 du véhicule par commande sans fil, un tableau de bord 62, et, par exemple, un système d'ouverture et de fermeture électrique des vitres.

L'unité de commande 5 du véhicule, est configurée pour acquérir différentes données représentatives de l'état du véhicule (température, présence ou non d'occupants dans le véhicule, niveau de carburant, niveaux de charge des batteries électriques, ...) et éventuellement de sa dynamique (vitesse de déplacement, localisation, etc...). L'unité de commande 5 est configurée aussi pour piloter différents organes du véhicule (afficheurs, système de freinage, injecteurs,...).

Une partie des équipements électriques du véhicule 1, notamment l'unité de commande 5 et le système électromécanique d'ouverture centralisée 61, fonctionnent, au moins par intermittence, lorsque le véhicule 1 est en stationnement prolongé. Un courant électrique de veille, en général de l'ordre de quelques milliampères, est donc consommé par ces équipements lorsque le véhicule 1 est en stationnement.

Le véhicule 1 est muni d'un circuit électrique 2 permettant d'alimenter ces équipements électriques, aussi bien lors d'un trajet effectué par le véhicule que lors d'un stationnement ce celui-ci.

Dans la suite de cet exposé, on définira un « stationnement » comme un état du véhicule dans lequel le moteur à combustion interne est à l'arrêt.

On s'intéressera plus particulièrement au cas d'un « stationnement prolongé ». Un tel stationnement prolongé sera défini comme un état du véhicule dans lequel le moteur à combustion interne 3 est éteint depuis une durée supérieure à une durée limite, cette durée limite correspondant par exemple à une journée.

Si le procédé qui sera décrit ci-après s'appliquera bien au cas du stationnement prolongé, il pourra bien entendu être mis en oeuvre dès que le début du stationnement du véhicule.

### Circuit électrique équipant le véhicule

De manière remarquable, le circuit électrique 2 du véhicule 1 comprend (figure 2) :
- une première batterie B1 d'accumulateurs électrique, destinée à alimenter le démarreur 4 du moteur, et
- une deuxième batterie B2 d'accumulateurs électrique, destinée à fournir le courant électrique de veille lorsque le véhicule est en stationnement prolongé (ce stationnement pouvant durer plusieurs semaines), et servant en quelque sorte de réserve de charge électrique pour le véhicule et pour la première batterie B1.

Employer ainsi deux batteries, dont la première a pour fonction de faire démarrer le moteur combustion interne 3, et dont la deuxième a entre autres pour fonction de fournir le courant électrique de veille, permet d'adapter au mieux les caractéristiques de chacune de ces batteries, et leur positionnement dans le véhicule, selon leurs fonctions respectives.

Ainsi, la deuxième batterie B2, qui sert en quelque sorte de réserve de charges électriques, est une batterie de grande capacité, relativement peu coûteuse, alors que la première batterie B1 est une batterie de plus petite capacité, mais plus robuste et plus performante que la deuxième batterie B2.

La première batterie B1 est logée dans le compartiment moteur 10, à proximité du démarreur 4, pour réduire la résistance de connexion entre elle et ce démarreur 4 (et limiter ainsi les chutes de tension entre les deux, lors du démarrage du moteur à combustion interne). Le démarreur 4 et la première batterie B1 sont connectés électriquement l'un à l'autre par des conducteurs électriques de grosse section (de section supérieure à 15 millimètres carrés, par exemple).

La deuxième batterie B2 est logée hors du compartiment moteur 10, pour dégager de la place dans celui-ci. La deuxième batterie B2 est logée plus précisément dans l'habitacle 11 du véhicule, de préférence dans le coffre à bagages. Elle est raccordée aux équipements électriques du véhicule par des conducteurs électriques de petite section (de section inférieure à 5 millimètres carrés, par exemple).

Les caractéristiques détaillées des première et deuxième batteries seront décrites en détail plus bas, après avoir présenté le circuit électrique 2 dans son ensemble.

Ce circuit électrique 2 comprend :
- une première partie, qui comprend le démarreur 4 et la première batterie B1 destinée à l'alimenter, et
- une deuxième partie, dédiée plus particulièrement à l'alimentation électrique des équipements de bord 6 du véhicule.

La première partie du circuit électrique 2 comprend un alternateur 7 accouplé au moteur à combustion interne 3, en plus de la première batterie B1 et du démarreur 4. Ces trois éléments sont connectés en parallèle les uns des autres : ils sont connectés chacun entre, d'une part, une masse électrique du réseau de bord, M, et, d'autre part, une première borne commune 21.

Ainsi, une borne de la première batterie B1 est reliée directement à la masse M, et une autre borne de cette batterie est reliée à la première borne commune 21 par l'intermédiaire d'un premier interrupteur commandé K1. Lorsque le premier interrupteur commandé K1 est ouvert (c'est-à-dire lorsqu'il est dans un état d'ouverture), la première batterie électrique est donc déconnectée du reste du circuit électrique 2, et ne débite pas de courant. En pratique, cet interrupteur est inclus dans le boitier de la première batterie B1, lors de la fabrication de celle-ci.

De la même manière, une borne du démarreur 4 est reliée directement à la masse M, et une autre borne du démarreur 4 est reliée à la première borne commune 21 par l'intermédiaire d'un troisième interrupteur commandé K3.

Quant aux deux bornes de l'alternateur 7, elles sont reliées directement, pour l'une à la masse M, et pour l'autre à la première borne commune 21.

Lorsque le premier interrupteur commandé K1 est fermé (c'est-à-dire lorsqu'il est dans un état de fermeture), l'alternateur 7 peut donc alimenter électriquement la première batterie B1. Et lorsque les premier et troisième interrupteurs K1 et K3 sont fermés, la première batterie B1 alimente électriquement le démarreur 4.

La deuxième partie du circuit électrique 2 comprend la deuxième batterie B2 et les équipements de bord 6 du véhicule mentionnés plus haut.

Ces équipements de bord 6 sont connectés entre la masse M et une deuxième borne commune 22. Et pour ce qui est de la deuxième batterie B2, une de ses bornes est reliée directement à la masse M tandis qu'une autre de ses bornes est reliée à la deuxième borne commune 22 par l'intermédiaire d'un deuxième interrupteur commandé K2.

Lorsque le deuxième interrupteur commandé K2 est fermé, la deuxième batterie alimente ainsi les équipements de bord 6. Comme pour la première batterie, le deuxième interrupteur commandé K2 est inclus dans le boitier de la deuxième batterie B2 lors de la fabrication de celle-ci.

Les première et deuxième parties du circuit sont reliées ici par l'intermédiaire d'un quatrième interrupteur commandé K4, le plus souvent fermé (sauf lorsque le véhicule roule avec son moteur à combustion interne éteint). Cet interrupteur relie entre elles les première et deuxième bornes communes 21, 22.

Lorsque les premier, deuxième et quatrième interrupteurs K1, K2 et K4 sont fermés, les première et deuxième batteries B1, B2 sont ainsi connectées électriquement l'une à l'autre, en parallèle.

Le quatrième interrupteur commandé K4 est optionnel, et, en variante, il pourrait être remplacé par un conducteur électrique reliant ces deux bornes communes.

La deuxième partie du circuit électrique 2 comprend par ailleurs un dispositif de chauffage 8 de la deuxième batterie B2, connecté entre la masse M et la deuxième borne commune 22 par l'intermédiaire d'une cinquième interrupteur commandé K5.

Enfin, l'unité de commande 5 du véhicule est alimentée elle aussi par la première et/ou la deuxième batterie B1, B2. Pour cela, des bornes d'alimentation de l'unité de commande 5 peuvent par exemple être connectées, pour l'une à la masse M, et pour l'autre à la première et/ou à la deuxième bornes communes 21, 22 (cette connexion n'est pas représenté sur la figure 2).

Les différents équipements électriques 4, 5, 6 du véhicule 1 sont aptes à assurer leurs fonctions respectives tant que la tension électrique qui les alimente reste comprise entre une tension nominale minimale Vmin, ici de 10,5 volts, et une tension nominale maximale Vmax, ici de 15,5 volts (de manière optionnelle, certains de ces équipements peuvent d'ailleurs être munis d'un convertisseur DC/DC régulant la tension électrique qu'ils reçoivent finalement).

L'alternateur 7 est donc configuré pour délivrer une tension électrique de bord réglable, en fonction d'une commande de tension Valt qu'il reçoit de l'unité de commande 5, entre ladite tension nominale minimale Vmin et ladite tension nominale maximale Vmax.

Le pilotage des différents interrupteurs commandés K1 à K5 et de la tension électrique délivrée par l'alternateur 7 est réalisé ici par l'unité de commande 5 du véhicule, comme cela sera expliqué en détail plus bas.

Cependant, en variante, le circuit électrique qui vient d'être décrit pourrait être équipé d'une unité de commande qui lui soit propre, distincte de l'unité de commande électronique du véhicule et programmée pour piloter l'alternateur et les interrupteurs commandés mentionnés ci-dessus.

### Caractéristiques des première et deuxième batteries du circuit électrique

Les caractéristiques des première et deuxième batteries B1 et B2 de ce circuit électrique 2 peuvent maintenant être présentées plus en détail.

Les technologies employées pour réaliser ces deux batteries sont nettement différentes l'une de l'autre.

La première batterie B1 est ici une batterie au Lithium, de type « LMO/LTO », c'est-à-dire avec des cathodes composées principalement d'un Oxyde de Lithium-Manganèse (« LMO »), et des anodes composées principalement de Titanate de Lithium (« LTO »).

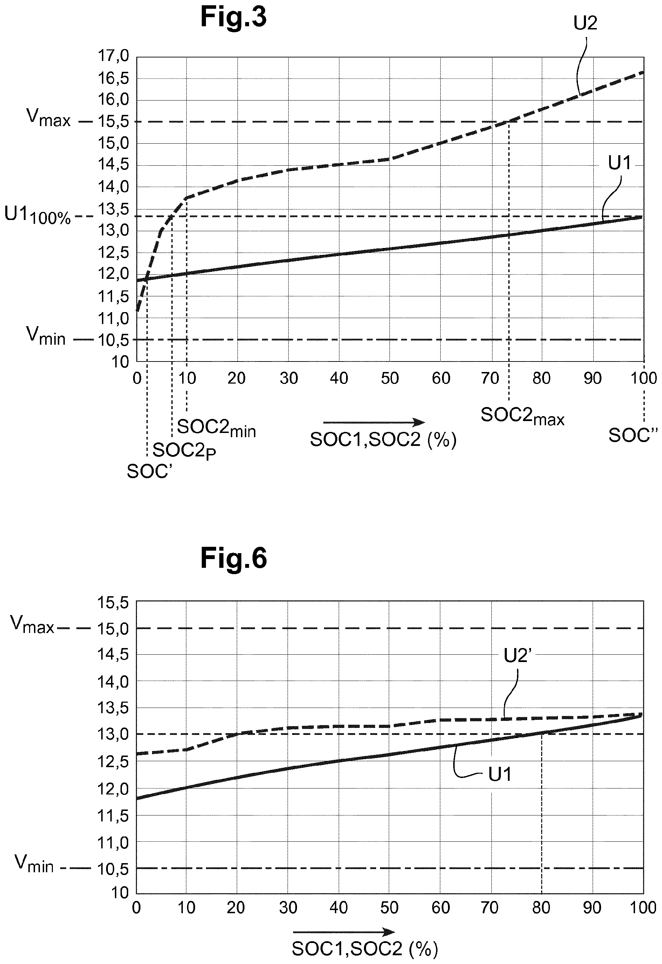

Elle comprend cinq cellules électrochimiques (c'est-à-dire cinq couples anode/cathode) connectées en série. Sa tension électrique en circuit ouvert, U1, reste comprise entre la tension nominale minimale Vmin et la tension nominale Vmax sur toute la plage de niveaux de charge comprise entre 0% (batterie complètement déchargée) et 100% (batterie totalement chargée) comme le montre la figure 3. La première batterie est donc bien adaptée pour alimenter les équipements électriques du véhicule, en particulier le démarreur 4, et elle peut être entièrement rechargée par l'alternateur (puisque la tension nominale maximale Vmax est supérieure à tension électrique aux bornes de la première batterie B1, même pour un niveau de charge de 100%).

Pour ce qui est de la deuxième batterie B2, il s'agit également d'une batterie au Lithium, mais du type « NMC/Graphite », c'est-à-dire avec des cathodes composées principalement d'un Oxyde de Cobalt-Lithium-Manganèse-Nickel (« NMC »), et des anodes composées principalement de Graphite.

Elle comprend cellules électrochimiques connectées en série. Sa tension électrique en circuit ouvert, U2, est supérieure à la tension nominale minimale Vmin quel que soit le niveau de charge SOC2 de cette batterie (figure 2). En revanche, sa tension électrique en circuit ouvert U2 devient supérieure à la tension nominale maximale Vmax lorsque le niveau de charge de la deuxième batterie dépasse un seuil de niveau de charge SOC2ₘₐₓ, qui en l'occurrence est égal à 73% environ. La deuxième batterie B2 est donc adaptée elle aussi à alimenter les équipements électriques du véhicule, mais elle ne peut pas être rechargée entièrement par l'alternateur 7. Celui-ci ne peut recharger la deuxième batterie B2 que jusqu'au seuil de niveau de charge SOC2ₘₐₓ mentionné ci-dessus.

Le fait que le niveau de charge SOC2 de la deuxième batterie B2 soit ainsi limité au seuil de niveau de charge SOC2ₘₐₓ, du fait des caractéristiques de fonctionnement de l'alternateur, présente de nombreux avantages. Tout d'abord, cela permet de limiter le vieillissement de la deuxième batterie B2, surtout dans les régions chaudes. Ensuite, cela autorise l'emploi, dans cette batterie, de cellules électrochimiques réformées provenant du recyclage d'autres batteries électriques au Lithium (par exemple des batteries de véhicules électriques ou hybrides). De telles cellules présentent des tensions électriques (en circuit ouvert) et/ou des capacités de charge totales souvent assez dispersées. Le fait de ne pas utiliser toute la capacité de charge disponible de ces cellules permet alors de garantir une capacité minimale donnée même avec des cellules dégradées de façon variable. D'autre part, le fait de ne pas recharger totalement la deuxième batterie B2 permet d'éviter de déposer du Lithium sur l'anode en graphite (ce qui serait préjudiciable pour le fonctionnement ultérieur de la batterie), lors d'une recharge de cette batterie électrique (le courant électrique de charge maximal admissible, permettant d'éviter un tel dépôt de Lithium, diminue nettement lorsque le niveau de charge de la batterie approche de 100%, ce qui rend délicat une recharge complète d'une telle batterie).

La figure 3 illustre en outre une propriété particulièrement remarquable des première et deuxième batteries électriques B1, B2 : à niveau de charge égal, la tension électrique en circuit ouvert U2 présentée par la deuxième batterie B2 est supérieure à la tension électrique en circuit ouvert U1 présentée par la première batterie B1, et cela sur toute une plage de niveaux de charge. En l'occurrence, cette plage de niveaux de charge est particulièrement large : elle s'étend ici d'un premier niveau de charge SOC', de 3% environ, à un deuxième niveau de charge SOC" de 100%.

Grâce à cette propriété, la première batterie B1 peut être rechargée par la deuxième batterie B2, et cela de manière particulièrement simple, en connectant directement ces deux batteries en parallèle l'une de l'autre (sans avoir à recourir à un système survolteur, par exemple).

Pouvoir recharger la première batterie B1 avec la deuxième batterie B2 est particulièrement intéressant car cela permet notamment de disposer d'un niveau de charge élevé pour la première batterie B1 lors d'un démarrage du moteur à combustion interne 3 (quitte à ce que celui de la deuxième batterie B2 diminue en contrepartie).

On constate aussi sur la figure 3 que la tension électrique en circuit ouvert U2 présentée par la deuxième batterie B2 est supérieure à la tension électrique en circuit ouvert U1 présentée par la première batterie B1 de quelques volts seulement (l'écart entre ces deux tensions reste inférieur à 3,5 volts environ). Cela permet, en connectant ces deux batteries directement en parallèle l'une de l'autre, de recharger la première batterie B1 avec la deuxième B2 sans risquer de détériorer la première batterie B1 (surtout si une telle recharge d'appoint est occasionnelle).

De plus, ce n'est pas seulement lorsque les deux batteries B1 et B2 présentent le même niveau de charge (c'est-à-dire lorsque SOC1=SOC2) que la tension électrique en circuit ouvert U2 de la deuxième batterie B2 est supérieure celle, U1 de la première batterie. En effet, sur toute une gamme de niveaux de charge SOC2 de la deuxième batterie (allant de 7% à 100% environ), la tension électrique en circuit ouvert U2 de la deuxième batterie B2 est supérieure à la valeur de tension électrique en circuit ouvert, U1_{100%}, présentée par la première batterie B1 lorsque cette dernière est complètement chargée.

Ainsi, même en étant partiellement déchargée, la deuxième batterie B2 reste donc avantageusement apte à recharger complètement la première batterie B1.

En outre, la tension électrique en circuit ouvert présentée par la deuxième batterie B2 lorsqu'elle est complètement déchargée, U2 (SOC2=0%), est inférieure à la tension électrique en circuit ouvert présentée par la première batterie B1 lorsque cette dernière est complètement chargée, U1 (SOC1=100%).

Grâce à cette propriété, la première batterie B1 protège la deuxième batterie B2 en s'opposant à une décharge complète de la deuxième batterie (ces deux batteries étant connectées en parallèle l'une de l'autre).

Ici, plus précisément, la tension électrique en circuit ouvert présentée par la première batterie B1 lorsqu'elle est complètement chargée, U1 (SOC1=100%), devient supérieure à la tension électrique en circuit ouvert U2 présentée par la deuxième batterie B2 dès que le niveau de charge de la deuxième batterie, SOC2, devient inférieur à un certain niveau de charge appelé niveau de charge de prise de relais SOC2ₚ (qui en l'occurrence est égal à 7% environ). En conséquence, lorsque le niveau de charge de la deuxième batterie, SOC2, devient inférieur au niveau de charge de prise de relais SOC2ₚ, la première batterie B1 pleinement chargée prend alors le relais de la deuxième batterie B2 pour ce qui de la fourniture de courant électrique et s'oppose ainsi une décharge complète de cette dernière.

Cette propriété est particulièrement intéressante ici, car la deuxième batterie est du type à anodes en graphite, et serait donc largement détériorée en cas de décharge totale.

### Pilotage des interrupteurs commandés du circuit électrique

La manière dont est programmée l'unité de commande 5, qui pilote les interrupteurs commandés K1 à K5 du circuit électrique, peut maintenant être décrite.

### Phase de stationnement prolongé du véhicule 1 : gestion et maintien du niveau de charge de la première batterie B1, avantages associés

L'unité de commande 5 est programmée pour, lors d'un stationnement prolongé du véhicule :
- commander les premier, troisième et cinquième interrupteurs K1, K3, K5 dans leur état d'ouverture, et
- commander le deuxième interrupteur K2 dans son état de fermeture.

L'état du quatrième interrupteur K4 est quant à lui indifférent.

Dans cette situation, le courant électrique de veille, consommé par les équipements de bord 6 et par l'unité de commande 5 du véhicule, est donc fourni par la deuxième batterie B2, tandis que la première batterie B1 ne débite pas de courant (le premier interrupteur commandé étant ouvert).

Le niveau de charge SOC1 de la première batterie électrique est donc conservé pendant cette phase (il ne diminue pas ou quasiment pas), et reste ainsi entièrement disponible pour un démarrage ultérieur du moteur à combustion interne 3.

Mais il peut s'avérer que le niveau de charge initial de la première batterie B1, au début d'une telle phase de stationnement, ne soit pas suffisant pour permettre un démarrage ultérieur du moteur à combustion interne 3.

Pour remédier à ce problème, l'unité de commande 5 est programmée pour, lors d'un stationnement prolongé du véhicule 1 :
- acquérir une donnée représentative d'une température T1 de la première batterie B1, et une donnée représentative de son niveau de charge SOC1,
- sur la base desdites données, comparer le niveau de charge de la première batterie SOC1 avec un niveau de charge de démarrage SOC1_{dem} pour lequel la première batterie B1, à ladite température T1, est apte à faire démarrer le moteur à combustion interne 3, et
- lorsque cette comparaison montre que le niveau de charge de la première batterie SOC1 est inférieur audit niveau de charge de démarrage SOC1_{dem}, pour commander chacun des premier, deuxième, et ici quatrième interrupteurs commandés K1, K2 et K4 dans leur état de fermeture.

Une fois ces interrupteurs fermés, la deuxième batterie B2 recharge la première batterie B1, puisque sa tension électrique en circuit ouvert U2 est supérieure à celle, U1, de la première batterie B1.

Le niveau de charge de la première batterie SOC1 augmente alors. Lorsqu'il atteint le niveau de charge de démarrage SOC1_{dem}, l'unité de commande 5 peut par exemple commander le premier interrupteur K1 dans son état d'ouverture, la deuxième batterie B2 cessant alors de recharger la première batterie B1.

Le niveau de charge de démarrage SOC1_{dem} est égal ici au plus petit niveau de charge pour lequel la première batterie B1, à la température T1, est apte à faire démarrer le moteur à combustion interne 3 (qui en pratique est lui aussi à la température T1). Le niveau de charge de démarrage SOC1_{dem} varie assez fortement avec la température T1, comme le montre la figure 4. Ici, par exemple, il passe de 40% seulement lorsque la température T1 est de 20 degrés Celsius, à près de 90% lorsque la température T1 est de - 20 degrés Celsius. Il est donc particulièrement utile que l'unité de commande 5 vérifie, à intervalles réguliers que le niveau de charge SOC1 de la première batterie B1 est supérieur au niveau de charge de démarrage SOC1_{dem}. En effet, un niveau de charge initial de la première batterie, suffisant en début de phase de stationnement pour faire démarrer le moteur, peut devenir ensuite insuffisant (même s'il n'a pas diminué), suite à une chute de la température de l'environnement du véhicule 1.

Ainsi, en plus d'éviter une décharge la première batterie B1 lors d'un stationnement prolongé, le circuit électrique 2 permet, si cela s'avère nécessaire, de recharger cette batterie pour qu'elle dispose d'un niveau de charge suffisant pour un démarrage ultérieur du moteur à combustion interne 3.

Grâce à cela, la capacité de charge totale de la première batterie B1 peut être réduite au minimum nécessaire pour faire démarrer le moteur à combustion interne 3 (puisque la première batterie est, si besoin, chargée complètement par la deuxième batterie, préalablement à un tel démarrage). La première batterie B1 peut ainsi être dimensionnée au plus juste, au lieu d'être surdimensionnée comme c'est le cas habituellement.

Réduire ainsi les dimensions de la première batterie B1 est particulièrement intéressant, car cela permet de loger facilement cette batterie dans le compartiment moteur 10 (qui est par ailleurs occupé par de nombreux organes du véhicule, souvent encombrants, et dont l'agencement les uns par rapport aux autres est complexe).

A titre d'exemple, dans le mode de réalisation décrit ici, la capacité de charge de la deuxième batterie B2 est de 50 ampères-heures environ, tandis que celle de la première batterie B1 a pu être réduite à seulement de 15 ampères-heures environ.

De plus, le fait d'alimenter les équipements électriques du véhicule 1 avec la deuxième batterie B2 seulement pendant les phases de stationnement prolongé permet de standardiser les dimensions de la première batterie B1, indépendamment des équipements de bord, optionnels, qui équipent le véhicule. Autrement formulé, cela permet de dimensionner la première batterie B1 en fonction seulement des caractéristiques du moteur à combustion interne 3 et de son démarreur 4. Cette standardisation contribue à la simplicité d'installation de la première batterie B1 dans le compartiment moteur 10.

Pour ce qui est des dimensions de la deuxième batterie B2, elles peuvent en revanche varier en fonction du nombre d'équipements de bords dont est muni le véhicule 1 (système de navigation intégré ou non au véhicule, présence ou non d'un système d'ouverture et fermeture électrique des vitres, etc...). Mais cela ne complique que peu l'installation de la deuxième batterie B2 dans le véhicule, puisqu'elle est logée dans une zone où le volume disponible est important (dans le coffre à bagages du véhicule), contrairement à la première batterie.

Comme déjà indiqué, la première batterie B1 est ici du type « LMO/LTO ». Employer ce type technologie (en particulier le fait d'employer des anodes de type « LTO ») permet à cette batterie de résister aux températures élevées régnant dans le compartiment moteur 10, sans se dégrader. Mais, en contrepartie, cela rend cette batterie onéreuse (nettement plus qu'une batterie de même capacité, à anodes en graphite). Réduire au minimum nécessaire les dimensions de la première batterie B1 (en augmentant en contrepartie celles de la deuxième batterie B2) permet donc de réduire le coût du circuit électrique 2 de manière très intéressante.

La durée de vie prévue pour la première batterie B1 peut, dans les conditions d'utilisation décrites ci-dessus, être comparable à celle attendue pour le véhicule 1 lui-même. Cette batterie, qui n'est alors plus une « pièce d'usure » du véhicule, peut donc être installée à demeure dans le compartiment moteur 10, sans avoir à prévoir un accès aisé à cette batterie (puisqu'il est peu probable qu'il faille la remplacer). Cela permet d'agencer les éléments logés dans le compartiment moteur 10 avec plus de liberté.

Quant à la deuxième batterie B2, même si elle est moins robuste que la première, du fait de son positionnement dans le coffre à bagages (dans un logement comparable à celui de la roue de secours par exemple), elle est facilement accessible et peut être remplacée aisément.

S'agissant maintenant de la gestion du niveau de charge SOC2 de la deuxième batterie, l'unité de commande 5 est programmée pour, en phase de stationnement prolongé du véhicule, à intervalles réguliers (par exemple toutes les 3 ou 4 heures) :
- acquérir une donnée représentative du niveau de charge de la deuxième batterie SOC2,
- sur la base de ladite donnée acquise, comparer le niveau de charge de la deuxième batterie SOC2 avec un niveau de charge minimal de réserve SOC2ₘᵢₙ, ici de 10% environ, et
- lorsque cette comparaison montre que le niveau de charge de la deuxième batterie SOC2 est inférieur ou égal au niveau de charge minimal de réserve SOC2ₘᵢₙ, pour commander le deuxième interrupteur commandé K2 dans son état d'ouverture.

Dans cette éventualité, la deuxième batterie B2 est alors déconnectée des différents équipements électriques du véhicule, ce qui permet d'éviter que son niveau de charge SOC2 ne baisse en dessous du niveau de charge minimal de réserve SOC2ₘᵢₙ. Dans une telle situation, le circuit électrique 2 ne fournit plus le courant électrique de veille nécessaire au fonctionnement des équipements de bord 6 du véhicule 1, et certaines fonctionnalités du véhicule ne sont alors pas disponibles (par exemple, les portières du véhicule doivent alors être déverrouillées manuellement au moyen d'une clef mécanique, et un démarrage manuel du moteur à combustion interne 3 - par exemple au moyen d'une clef de contact - est nécessaire). Cela permet en contrepartie d'éviter une décharge totale de la deuxième batterie B2, qui pourrait la dégrader.

Toujours à propos du pilotage réalisé par l'unité de commande 5, il est noté que cette unité de commande 5 est apte à déterminer, d'elle-même, que le véhicule est en stationnement prolongé, c'est-à-dire en veille. Dans le mode de réalisation décrit ici, l'unité de commande 5 est programmée plus précisément pour :
- détecter que le véhicule a reçu une commande de mise en veille (par exemple en cas de réception d'une commande de verrouillage centralisé provenant d'une télécommande de verrouillage, telle qu'une clef de type « plip »), et/ou détecter qu'un badge de déverrouillage du véhicule n'est plus situé dans le véhicule ou dans un voisinage délimité donné de celui-ci, et
- en cas de détection, pour déterminer qu'un stationnement prolongé du véhicule débute.

En variante ou en complément, l'unité de commande 5 pourrait être programmée pour :
- détecter que le moteur à combustion interne 3 est éteint et que le véhicule 1 est inoccupé et/ou détecter que le moteur à combustion interne 3 est éteint et que le frein de parking est serré, et
- en cas de détection, pour déterminer que le véhicule est en stationnement prolongé.

### Phase de démarrage du moteur à combustion interne

L'unité de commande 5 est programmée pour, en phase de démarrage du moteur à combustion interne 3, commander le premier interrupteur commandé K1 dans son état de fermeture.

Le troisième interrupteur commandé K3 est ensuite fermé pour que la première batterie B1 alimente le démarreur 4, qui fait alors démarrer le moteur à combustion interne 3. Après le démarrage du moteur, le troisième interrupteur commandé K3 est ouvert.

Le quatrième interrupteur commandé K4 est quant à lui fermé pendant toute cette phase.

Pour ce qui est des deuxième et cinquième interrupteurs commandés K2 et K5, l'état dans lequel ils sont commandés dépend de la température T2 de la deuxième batterie B2. En effet, il faut éviter de recharger cette batterie, à anode au graphite, lorsque sa température est basse, typiquement inférieure à 10 degrés Celsius.

Lorsque la température T2 de la deuxième batterie B2 est supérieure à 10 degrés Celsius, l'unité de commande 5 commande le deuxième interrupteur commandé K2 dans son état de fermeture dès le début de la phase de démarrage (tandis que le cinquième interrupteur commandé K5 reste ouvert). La phase de recharge de la deuxième batterie B2 (décrite plus bas) débute alors dès que le moteur a démarré.

Par contre, lorsque la température T2 de la deuxième batterie B2 est inférieure à 10 degrés Celsius, l'unité de commande 5 commande le deuxième interrupteur commandé K2 dans son état d'ouverture, et le cinquième interrupteur commandé K5 dans son état de fermeture. Ainsi, la première batterie B1, puis l'alternateur 7 une fois que le moteur a démarré, alimentent le dispositif de chauffage 8 de la deuxième batterie. Une fois que la température T2 de la deuxième batterie B2 est devenue supérieure ou égale à 10 degrés Celsius, la phase de recharge de la deuxième batterie B2 débute.

Il est noté là encore que l'unité de commande 5 est apte à déterminer d'elle-même que le véhicule est phase de démarrage. Pour cela, elle est programmée par exemple de manière à :
- détecter que le véhicule a reçu une commande de déverrouillage du véhicule (provenant par exemple d'une télécommande de verrouillage), et/ou détecter qu'un badge de déverrouillage du véhicule est situé dans le véhicule ou dans un voisinage délimité donné de celui-ci, et
- en cas de détection, pour déterminer qu'une phase de démarrage du véhicule débute.

### Phase de recharge de la deuxième batterie électrique

Lorsque le moteur a démarré et qu'une recharge de la deuxième batterie est opportune (par exemple parce que cette batterie s'est nettement déchargée lors de la phase de stationnement prolongé précédente), l'unité de commande 5 commande :
- les premier, troisième et cinquième interrupteurs commandés K1, K3 et K5 dans leur état d'ouverture, et
- les deuxième et quatrième interrupteurs commandés K2 et K4 dans leur état de fermeture,
si bien que l'alternateur 7 recharge alors la deuxième batterie B2.

Par ailleurs, l'unité de commande 5 pilote l'alternateur 7, via la commande de tension Valt mentionnée plus haut, pour que la tension électrique de bord qu'il délivre cause une recharge de la deuxième batterie B2 sous un courant électrique de charge 12 limité, inférieur à un courant électrique maximal admissible pour cette batterie.

Ce courant électrique maximal admissible est le courant électrique limite au-delà duquel du Lithium se dépose sur les anodes en graphite de la deuxième batterie. Sa valeur décroit lorsque la température de la deuxième batterie diminue, et lorsque son niveau de charge SOC2 approche de 100%. La valeur du courant électrique maximal admissible est déterminée par l'unité de commande 5, en fonction notamment de la température T2 de la deuxième batterie et de son niveau de charge SOC2.

### Fonctionnement du véhicule en mode micro-hybride

Un mode de fonctionnement micro-hybride du véhicule est un mode de fonctionnement dans lequel :
- lors d'un freinage du véhicule, une partie de l'énergie cinétique du véhicule est convertie par l'alternateur en énergie électrique pour la stocker dans la ou les batteries du véhicule (freinage en récupération, au moyen de l'alternateur), et dans lequel,
- au contraire, lorsque le rendement du moteur à combustion interne est faible, l'alternateur délivre peu, voire aucune énergie électrique.

Un fonctionnement en mode micro-hybride permet donc de réduire avantageusement la consommation de carburant du véhicule 1.

Dans un tel mode de fonctionnement, l'unité de commande 5 commande :
- les deuxième, troisième et cinquième interrupteurs commandés K2, K3, et K5 dans leur état d'ouverture, et
- les premier et quatrième interrupteurs commandés K1 et K4 dans leur état de fermeture.

L'alternateur 7 est ainsi relié électriquement à la première batterie B1, mais pas à la deuxième.

De plus, l'unité de commande 5 pilote l'alternateur 7 (via la commande de tension Valt mentionnée plus haut) de manière à ce que la tension électrique de bord qu'il délivre soit :
- la plus grande possible lorsque le véhicule freine (donc ici égale à la tension nominale maximale Vmax), pour que l'alternateur recharge le plus possible la première batterie lors de ce freinage (l'alternateur présentant alors un résistance mécanique accrue) et
- au contraire, égale à la tension nominale minimale Vmin (ou tout au moins inférieure à la tension électrique présentée par la première batterie B1), lorsque le rendement du moteur à combustion interne 3 est faible, inférieur à un seuil donné, ce qui permet de délester l'alternateur (puisqu'il ne recharge alors plus la première batterie).

Dans un tel mode de fonctionnement, la première batterie B1 est alternativement chargée, puis décharge, puis chargée, et ainsi de suite. Son niveau de charge SOC1 varie alors entre 30% et 90% environ, par exemple, pour permettre une économie de carburant optimale.

Dans cette situation, le véhicule peut donc être mis à l'arrêt, en stationnement prolongé, alors que la première batterie B1 n'est que partiellement chargée. Le fait que le circuit électrique 2 permette ensuite une recharge, si besoin complète, de la première batterie en vue d'un démarrage ultérieur est donc particulièrement intéressant (cela permet à la fois un fonctionnement micro-hydride sur une plage de niveaux de charge optimale, et un démarrage ultérieur du véhicule).

### Phase de déplacement avec le moteur à combustion interne éteint

Dans certaines circonstances, en descente, il est prévu d'éteindre le moteur à combustion interne 3 pour économiser du carburant. Le véhicule 1 est alors mû sous l'effet de son propre poids et de son inertie (ce mode de déplacement est parfois appelé « sailing stop » en anglais, ou « arrêt de l'entrainement »).

Dans ce cas, l'unité de commande 5 commande :
- les troisième, quatrième et cinquième interrupteurs commandés K3, K4, K5 dans leur état d'ouverture, et
- les premier et deuxième interrupteurs commandés K1, K2 dans leur état de fermeture.

La deuxième batterie B2 fournit alors le courant électrique nécessaire au fonctionnement des équipements de bord 6 et de l'unité de commande 5 du véhicule.

Le niveau de charge de la première batterie B1 est ainsi préservé, et le moteur à combustion interne 3 peut ainsi être redémarré à tout instant, si besoin, en fermant le troisième interrupteur commandé K3.

Dans une telle configuration, la tension électrique qui alimente les équipements électriques du véhicule (autres que le démarreur) n'est plus fixée par l'alternateur 7, puisque ce dernier n'est plus entrainé par le moteur (qui est éteint, et débrayé, le véhicule roulant en « roues libres »).

Fermer le quatrième interrupteur commandé K4 entrainerait donc une diminution de la tension électrique alimentant les équipements électriques du véhicule, puisque la tension électrique entre la masse M et la deuxième borne commune 22 s'établirait alors à une valeur comprise ente la tension électrique de la deuxième batterie B2, et celle, plus basse, de la première batterie B1.

Disposer du quatrième interrupteur commandé K4 permet alors de séparer les première et deuxième parties du circuit électrique 2, et d'éviter une telle baisse de la tension électrique qui alimente ces équipements
Le quatrième interrupteur commandé K4 peut aussi être maintenu ouvert lors du redémarrage du moteur à combustion interne 3 (dans la plupart des autres phases de fonctionnement du véhicule, comme cela a été décrit plus haut, le quatrième interrupteur commandé K4 est en revanche fermé).

Lorsque le véhicule 1 roule avec son moteur à combustion interne 3 éteint, le fait de disposer à la fois de la première et de la deuxième batterie permet une redondance des sources d'énergie électrique qui améliore la sécurité de fonctionnement du véhicule 1.

En effet, en cas de défaillance subite de la première batterie B1, les troisième et quatrième interrupteurs commandés K4, K3 sont commandés dans leur état de fermeture, et la deuxième batterie B2 fait alors démarrer le moteur à combustion 3. Dans ce cas, elle fournit aussi l'énergie électrique nécessaire pour assurer des fonctions de sécurité du véhicule 1 jusqu'à un arrêt de celui-ci.

Cette redondance des sources d'alimentation électrique du véhicule, qui est cruciale lorsqu'il roule avec son moteur à combustion interne 3 éteint, améliorer aussi sa sécurité de fonctionnement dans les autres phases de fonctionnement décrites plus haut.

### Autre exemple de couple de batteries

Dans un deuxième mode de réalisation de l'invention (figure 5), la deuxième batterie B2' du circuit électrique 2 est une batterie au Lithium du type « LFP/graphite » (c'est-à-dire avec des cathodes composées principalement de Phosphate de Fer Lithié, et des anodes composées principalement de graphite), au lieu d'être du type « NMC/graphite ».

Quant aux autres composants du circuit électrique 2, ils sont identiques dans ce deuxième mode de réalisation et dans le premier mode de réalisation décrit plus haut (en particulier la première batterie B1 est identique à celle du premier mode de réalisation).

La tension électrique en circuit ouvert U2', présentée par la deuxième batterie B2' de ce deuxième mode de réalisation, est représentée schématiquement sur la figure 6 en fonction de son niveau de charge SOC2. Cette batterie comporte là encore cinq cellules électrochimiques connectées en série. La tension électrique en circuit ouvert U1 présentée par la première batterie B1 est représentée à nouveau sur cette figure.

Comme on peut le voir sur cette figure, pour un même niveau de charge des deux batteries B1 et B2', la tension électrique en circuit ouvert U2' de la deuxième batterie B2' est supérieure, à celle U1 de la première batterie, et cela sur toute une plage de niveaux de charge (en l'occurrence de 0% à 100%).

Cette deuxième batterie B2' est donc bien adaptée elle aussi pour servir de batterie électrique « de réserve », rechargeant la première batterie B1 en fonction des besoins (et fournissant le courant électrique de veille).

De plus, la tension électrique en circuit ouvert U2' présentée par la deuxième batterie B2' est supérieure à la tension électrique en circuit ouvert U1 présentée par la première batterie B1, même lorsque la deuxième batterie B2' n'est qu'à moitié chargée et que le niveau de charge de la première batterie SOC1 est supérieur à un seuil de 90%.

La deuxième batterie B2' de ce deuxième mode de réalisation est donc apte, lorsque son niveau de charge SOC2 est supérieur ne serait-ce qu'à 50%, à recharger la première batterie B1 presque complètement (en l'occurrence jusqu'à un niveau de charge de 90%).

Les deux couples de batteries électriques B1, B2, et B1, B2' décrits plus haut ont été présentés à titre d'exemple : d'autres couples de batteries électriques, présentant une ou plusieurs des propriétés intéressantes mentionnées plus haut, peuvent être envisagés en variante.

Lors du choix d'un tel couple de batteries électriques, s'il s'agit de batteries au Lithium, on pourra par exemple choisir :
- pour la première batterie, une batterie à anodes de type « LTO », qui, comme expliqué plus haut, a l'avantage de bien résister aux températures élevées du compartiment moteur et de pouvoir être rechargée à basse température et très rapidement ; les cathodes de cette batterie peuvent quant à elles être du type « LMO » (comme dans les modes de réalisation décrits plus haut), « NMC », ou encore, par exemple, du type « LCO » (c'est-à-dire composée principalement d'Oxyde de Cobalt-Lithium), et
- pour la deuxième batterie, une batterie à anodes au carbone, par exemple de type « graphite », ou de type « carbone dur » (forme désordonnée de carbone), qui a l'avantage d'être peu coûteuse et est donc bien adaptée pour une batterie de grande capacité ; les cathodes de cette deuxième batterie peuvent alors être du type « NMC », « LFP » (comme dans les modes de réalisation décrits plus haut), ou encore « LCO ».

En variante encore, l'une deux batteries du circuit électrique pourrait être une batterie électrique au Nickel, ou même éventuellement au Plomb.

## Revendications

1. Circuit électrique (2) pour un véhicule (1) automobile comportant des équipements électriques (4, 5, 6) et un moteur à combustion interne (3), le circuit électrique (2) comprenant :
- une première batterie (B1) électrique, connectée à une partie au moins desdits équipements électriques (4, 5, 6) par l'intermédiaire d'un premier interrupteur commandé (K1),
- une deuxième batterie (B2 ; B2') électrique, connectée à une partie au moins desdits équipements électriques (4, 5, 6) par l'intermédiaire d'un deuxième interrupteur commandé (K2), et
- une unité de commande (5) électronique apte à commander les premier et deuxième interrupteurs commandés (K1, K2),
**caractérisé en ce que** :
- l'unité de commande (5) est programmée pour :
- commander le premier interrupteur (K1) dans un état d'ouverture et le deuxième interrupteur (K2) dans un état de fermeture lorsque le véhicule (1) automobile est en stationnement prolongé, et pour
- commander le premier interrupteur (K1) dans un état de fermeture en phase de démarrage du moteur à combustion interne (3), **en ce que**
- à niveau de charge égal et compris dans au moins une plage donnée de niveaux de charge, la tension électrique en circuit ouvert (U2 ; U2') de la deuxième batterie (B2 ; B2') est supérieure à la tension électrique en circuit ouvert (U1) de la première batterie (B1), et **en ce que**
l'unité de commande (5) est programmée pour, lorsque le véhicule (1) est en stationnement prolongé :
- acquérir une donnée représentative d'une température de la première batterie (T1), et une donnée représentative d'un niveau de charge de la première batterie (SOC1),
- sur la base desdites données, comparer le niveau de charge de la première batterie (SOC1) avec un niveau de charge de démarrage (SOC1_{dem}) pour lequel la première batterie (B1), à ladite température (T1), est apte à faire démarrer le moteur à combustion interne (3), et
- lorsque cette comparaison montre que le niveau de charge de la première batterie (SOC1) est inférieur audit niveau de charge de démarrage (SOC1_{dem}), pour commander chacun des premier et deuxième interrupteurs commandés (K1, K2) dans son état de fermeture.

2. Circuit électrique (2) selon la revendication 1 dans lequel ladite plage de niveaux de charge s'étend d'un premier niveau de charge (SOC') à un deuxième niveau de charge (SOC"), le premier niveau de charge (SOC') étant inférieur ou égal à 40% et le deuxième niveau de charge (SOC") étant supérieur ou égal à 80%.

3. Circuit électrique (2) selon l'une des revendications 1 et 2 dans lequel, la tension électrique en circuit ouvert (U2 ; U2') présentée par la deuxième batterie (B2 ; B2') est supérieure à la tension électrique en circuit ouvert (U1) présentée par la première batterie (B1) même lorsque la deuxième batterie (B2 ; B2') n'est qu'à moitié chargée et que le niveau de charge de la première batterie (SOC1) est supérieur à un seuil de 80%.

4. Circuit électrique (2) selon l'une des revendications 1 à 3, dans lequel la tension électrique en circuit ouvert (U2) présentée par la deuxième batterie (B2) lorsqu'elle est complètement déchargée est inférieure à la tension électrique en circuit ouvert (U1) présentée par la première batterie (B1) lorsqu'elle est complètement chargée.

5. Circuit électrique (2) selon l'une des revendications 1 à 4,
- comprenant en outre un alternateur (7) à accoupler au moteur à combustion interne (3), l'alternateur (7) étant configuré pour délivrer une tension électrique de bord réglable, au maximum égale à une tension nominale maximale (Vmax),
- et dans lequel la tension électrique en circuit ouvert (U2) présentée par la deuxième batterie (B2) devient supérieure à ladite tension nominale maximale (Vmax) pour un niveau de charge partiel de la deuxième batterie (SOC2ₘₐₓ).

6. Circuit électrique (2) selon l'une des revendications 1 à 5, dans lequel chacune des première (B1) et deuxième batteries (B2 ; B2') est une batterie au Lithium.

7. Circuit électrique (2) selon l'une des revendications 1 à 6, dans lequel l'unité de commande (5) est programmée pour, lorsque le véhicule (1) est en stationnement prolongé :
- acquérir une donnée représentative du niveau de charge de la deuxième batterie (SOC2), et
- sur la base de ladite donnée acquise, comparer le niveau de charge de la deuxième batterie (SOC2) avec un niveau de charge minimal de réserve (SOC2ₘᵢₙ), et
- lorsque cette comparaison montre que le niveau de charge de la deuxième batterie (SOC2) est inférieur ou égal au niveau de charge minimal de réserve (SOC2ₘᵢₙ), pour commander le deuxième interrupteur commandé (K2) dans son état d'ouverture.

8. Véhicule (1) automobile comprenant un moteur à combustion interne (3), des équipements électriques (4, 5, 6), et un circuit électrique (2) tel que défini par l'une des revendications 1 à 7.

9. Véhicule (1) automobile selon la revendication 8, comprenant un compartiment moteur (10), dans lequel la première batterie (B1) est logée dans le compartiment moteur (10), et dans lequel la deuxième batterie (B2) est logée hors du compartiment moteur (10).

## Patentansprüche

1. Elektrische Schaltung (2) für ein Kraftfahrzeug (1), umfassend elektrische Ausrüstungen (4, 5, 6) und einen Verbrennungsmotor (3), wobei die elektrische Schaltung (2) umfasst:
- eine erste elektrische Batterie (B1), die über einen ersten gesteuerten Schalter (K1) mit mindestens einem Teil der elektrischen Ausrüstungen (4, 5, 6) verbunden ist,
- eine zweite elektrische Batterie (B2; B2'), die über einen zweiten gesteuerten Schalter (K2) mit mindestens einem Teil der elektrischen Ausrüstungen (4, 5, 6) verbunden ist, und
- eine elektronische Steuereinheit (5), die in der Lage ist, den ersten und zweiten gesteuerten Schalter (K1, K2) zu steuern,
**dadurch gekennzeichnet, dass:**
- die Steuereinheit (5) programmiert ist zum:
- Steuern des ersten Schalters (K1) in einen geöffneten Zustand und des zweiten Schalters (K2) in einen geschlossenen Zustand, wenn das Kraftfahrzeug (1) über einen längeren Zeitraum geparkt ist, und
- Steuern des ersten Schalters (K1) in einer Startphase des Verbrennungsmotors (3) in einen geschlossenen Zustand, dass
- bei gleichem Ladezustand und in mindestens einem vorgegebenen Bereich von Ladezuständen die elektrische Leerlaufspannung (U2; U2') der zweiten Batterie (B2; B2') größer ist als die elektrische Leerlaufspannung (U1) der ersten Batterie (B1), und dass
die Steuereinheit (5) bei längerem Parken des Fahrzeugs (1) programmiert ist zum:
- Erfassen von Daten, die für eine Temperatur der ersten Batterie (T1) repräsentativ sind, und Daten, die für einen Ladezustand der ersten Batterie (SOC1) repräsentativ sind,
- Vergleichen, basierend auf diesen Daten, des Ladezustands der ersten Batterie (SOC1) mit einem Startladezustand (SOC1_{Start}), wobei die erste Batterie (B1) bei dieser Temperatur (T1) in der Lage ist, den Verbrennungsmotor (3) zu starten, und
- wenn dieser Vergleich aufzeigt, dass der Ladezustand der ersten Batterie (SOC1) niedriger ist als der Startladezustand (SOC1_{Start}), Steuern jedes des ersten und zweiten gesteuerten Schalters (K1, K2) in seinen geschlossenen Zustand.

2. Elektrische Schaltung (2) nach Anspruch 1, wobei sich der Bereich des Ladezustands von einem ersten Ladezustand (SOC') zu einem zweiten Ladezustand (SOC") erstreckt, wobei der erste Ladezustand (SOC') kleiner oder gleich 40 % ist und der zweite Ladezustand (SOC") größer oder gleich 80 % ist.

3. Elektrische Schaltung (2) nach einem der Ansprüche 1 und 2, wobei die von der zweiten Batterie (B2; B2') bereitgestellte elektrische Leerlaufspannung (U2; U2') größer ist als die von der ersten Batterie (B1) bereitgestellte elektrische Leerlaufspannung (U1), selbst wenn die zweite Batterie (B2; B2') nur zur Hälfte geladen ist und der Ladezustand der ersten Batterie (SOC1) größer als ein Schwellenwert von 80 % ist.

4. Elektrische Schaltung (2) nach einem der Ansprüche 1 bis 3, wobei die von der zweiten Batterie (B2) bei vollständiger Entladung bereitgestellte Leerlaufspannung (U2) niedriger ist als die von der ersten Batterie (B1) bereitgestellte Leerlaufspannung (U1), wenn sie vollständig geladen ist.

5. Elektrische Schaltung (2) nach einem der Ansprüche 1 bis 4,
- ferner umfassend einen Wechselstromgenerator (7), der mit dem Verbrennungsmotor (3) zu koppeln ist, wobei der Wechselstromgenerator (7) konfiguriert ist, um eine einstellbare elektrische Bordspannung zuzuführen, die höchstens einer maximalen Nennspannung (Vmax) entspricht,
- und wobei die von der zweiten Batterie (B2) bereitgestellte elektrische Leerlaufspannung (U2) für einen Teilladezustand der zweiten Batterie (SOC2ₘₐₓ) größer als die maximale Nennspannung (Vmax) wird.

6. Elektrische Schaltung (2) nach einem der Ansprüche 1 bis 5, wobei die erste (B1) und zweite Batterie (B2; B2') jeweils eine Lithiumbatterie ist.

7. Elektrische Schaltung (2) nach einem der Ansprüche 1 bis 6, wobei die Steuereinheit (5) bei längerem Parken des Fahrzeugs (1) programmiert ist zum:
- Erfassen von Daten, die für den Ladezustand der zweiten Batterie (SOC2) repräsentativ sind, und
- Vergleichen, auf der Grundlage der erfassten Daten, des Ladezustands der zweiten Batterie (SOC2) mit einem Mindestreserveladezustand (SOC2ₘᵢₙ), und
- wenn dieser Vergleich aufzeigt, dass der Ladezustand der zweiten Batterie (SOC2) kleiner oder gleich dem Mindestreserveladezustand (SOC2ₘᵢₙ) ist, Steuern des zweiten gesteuerten Schalters (K2) in seinen geöffneten Zustand.

8. Kraftfahrzeug (1), umfassend einen Verbrennungsmotor (3), elektrische Ausrüstungen (4, 5, 6) und eine elektrische Schaltung (2) nach einem der Ansprüche 1 bis 7.

9. Kraftfahrzeug (1) nach Anspruch 8, umfassend einen Motorraum (10), wobei die erste Batterie (B1) in dem Motorraum (10) untergebracht ist, und wobei die zweite Batterie (B2) außerhalb des Motorraums (10) untergebracht ist.

## Claims

1. An electrical circuit (2) for a motor vehicle (1) having electrical equipment (4, 5, 6) and an internal combustion engine (3), the electrical circuit (2) comprising:
- a first electrical battery (B1), connected to at least some of said electrical equipment (4, 5, 6) via a first controlled switch (K1),
- a second electrical battery (B2; B2'), connected to at least some of said electrical equipment (4, 5, 6) via a second controlled switch (K2), and
- an electronic control unit (5) capable of controlling the first and second controlled switches (K1, K2),
**characterized in that:**
- the control unit (5) is programmed to:
- control the first switch (K1) to adopt an open state and the second switch (K2) to adopt a closed state when the motor vehicle (1) is parked for a long time, and to
- control the first switch (K1) to adopt a closed state during the start-up phase of the internal combustion engine (3), **in that**
- at the same charge level and within at least one given range of charge levels, the open-circuit voltage (U2; U2') of the second battery (B2; B2') is higher than the open-circuit voltage (U1) of the first battery (B1), and **in that**
the control unit (5) is programmed to, when the vehicle (1) is parked for a long time:
- acquire data representative of a temperature of the first battery (T1), and data representative of a charge level of the first battery (SOC1),
- on the basis of said data, compare the charge level of the first battery (SOC1) with a start-up charge level (SOC1_{dem}) for which the first battery (B1), at said temperature (T1), is capable of starting up the internal combustion engine (3), and
- when this comparison shows that the charge level of the first battery (SOC1) is lower than said start-up charge level (SOC1 _{dem}), to control both the first and second controlled switches (K1, K2) to adopt their closed states.

2. The electrical circuit (2) according to claim 1 wherein said range of charge levels extends from a first charge level (SOC') to a second charge level (SOC"), the first charge level (SOC') being less than or equal to 40% and the second charge level (SOC") being greater than or equal to 80%.

3. The electrical circuit (2) according to one of claims 1 and 2, wherein the open-circuit voltage (U2; U2') presented by the second battery (B2; B2') is higher than the open-circuit voltage (U1) presented by the first battery (B1) even when the second battery (B2; B2') is only half-charged and the charge level of the first battery (SOC1) is above a threshold of 80%.

4. The electrical circuit (2) according to one of claims 1 to 3, wherein the open-circuit voltage (U2) presented by the second battery (B2) when fully discharged is lower than the open-circuit voltage (U1) presented by the first battery (B1) when fully charged.

5. The electrical circuit (2) according to one of claims 1 to 4,
- further comprising an alternator (7) to be coupled to the internal combustion engine (3), the alternator (7) being configured to deliver an adjustable on-board voltage, at most equal to a maximum nominal voltage (Vmax),
- and wherein the open-circuit voltage (U2) presented by the second battery (B2) becomes greater than said maximum nominal voltage (Vmax) for a partial charge level of the second battery (SOC2ₘₐₓ).

6. The electrical circuit (2) according to one of claims 1 to 5, wherein both the first (B1) and second (B2; B2') batteries are lithium batteries.

7. The electrical circuit (2) according to one of claims 1 to 6, wherein the control unit (5) is programmed to, when the vehicle (1) is parked for a long time:
- acquire data representative of the charge level of the second battery (SOC2), and
- on the basis of said acquired data, compare the charge level of the second battery (SOC2) with a minimum reserve charge level (SOC2ₘᵢₙ), and
- when this comparison shows that the charge level of the second battery (SOC2) is less than or equal to the minimum reserve charge level (SOC2ₘᵢₙ), to control the second controlled switch (K2) to adopt its open state.

8. A motor vehicle (1) comprising an internal combustion engine (3), electrical equipment (4, 5, 6), and an electrical circuit (2) as defined by one of claims 1 to 7.

9. The motor vehicle (1) according to claim 8, comprising an engine compartment (10), wherein the first battery (B1) is housed in the engine compartment (10), and wherein the second battery (B2) is housed outside the engine compartment (10).
